# EUROPEAN PATENT APPLICATION

(11) **EP 0 967 151 A1**
(43) Date of publication of application: **29.12.1999**
(21) Application number: 99111885.2
(22) Date of filing: 21.06.1999
(51) Int. Cl.: B65B 51/22, B65B 9/02, B65B 11/48

(54) **Device to complete the packaging of wrappers for brushes**

(30) Priority: 23.06.1998 IT UD980105
(71) Applicant: Polese Giovanni Automation Srl, 33070 Stevena' di Caneva (PN) (IT)
(72) Inventor: Polese, Giovanni Pietro, 33070 Sarone di Caneva (PN) (IT)
(74) Representative: Petraz, Gilberto Luigi

(57) **Abstract**

Device to complete the packaging of wrappers (24) for brushes (13) each one having a handle (14) and a bunch of bristles (15), the wrappers to be completed (24) having a substantially tubular shape, defined by two strips of film (25,26) which are super-imposed and welded together along the edges, and have an open outer end portion which extends beyond the bunch of bristles (15), the device comprising two welding elements (28a, 28b) arranged on opposite sides with respect to the wrapper to be completed (24) and movable one against the other between a first inactive position, not interfering with the outer end portion of the wrapper (24), and a second working position in contact with the outer end portion, the welding elements (28a,28b) being suitable to weld the two super-imposed strips of film (25,26) in correspondence with the outer end portion.

## Description

### FIELD OF THE INVENTION

This invention concerns a device to complete the packaging of wrappers for brushes as set forth in the main claim.

The invention is used downstream of a packaging station suitable to provide at outlet brushes packaged individually with a protective wrapper closed on three sides and having the end portion, which is located in correspondence with the front end of the bunch of bristles, open.

The device according to the invention is suitable to complete the wrappers by closing the end portion either definitively or temporarily with a flap which can be opened; at the same time the device is suitable to reinforce the end portion in order to allow eyelets or punch holes to be made, which can be used to hang the brushes to the display stands provided in the sales outlets.

Hereinafter, the term brush should be taken to mean an object equipped with a handle which has bristles at the ends to be protected by a wrapper.

### BACKGROUND OF THE INVENTION

The state of the art includes brushes which are put onto the market packaged individually with a protective wrapper suitable to wrap both the end portion of the handle and the bundle of bristles attached to the end portion by means of a ring or ferrule.

At present, in order to accelerate the time needed to apply the protective wrappers and to reduce labour costs, various automatic packaging machines have been proposed suitable to achieve a wrapper closed on three sides and open at the front on the side of the bunch of bristles.

Machines known to the art have operating problems in closing and welding the open end portion of the wrapper, in applying reinforcement parts on said end portion in order to achieve the punch holes and in turning over the flap used to close the protective wrapper at the front in such a way that it can be opened.

Therefore, even if a part of the packaging process has been automated, many of the operations to complete and finish the packaging are still carried out manually.

The present Applicant has devised and embodied this invention to overcome the shortcomings which businessmen in this field have long complained about, and to obtain other advantages as will be shown hereafter.

### SUMMARY OF THE INVENTION

The invention is set forth and characterised in the main claim, while the dependent claims describe other characteristics of the idea of the main embodiment.

The purpose of the invention is to achieve a device to complete the packaging of wrappers for brushes which is completely automatic, reliable and will give a high level of productivity.

Another purpose of the invention is to provide a device suitable to achieve all the different types of finished wrappers required by the market while maintaining its configuration unchanged.

The device according to the invention is normally used downstream of a packaging station located in line and suitable to deliver individually packaged brushes with a protective wrapper which wraps the end portion of the handle and the bunch of bristles associated therewith, having the end portion open, on the side of the bunch of bristles.

The protective wrapper may be made of plastic material such as for example PVC, polyethylene, copolymers of ethylene or otherwise.

On the end portion of the wrapper which is open at the front, the device according to the invention may be suitable to insert and weld at least a supplementary film, the function which is to reinforce and/or act as a closing element for the wrapper.

The supplementary film stiffens the end portion of the wrapper, ensuring a stable and long-lasting closure; moreover, sections of film may be included which protrude with respect to the bristles of the brush on which eyelets or punch holes made be made which can be used to hang the brushes on the display stands in sales outlets.

Moreover, the device allows to provide flaps, or lips, which can be re-closed temporarily and make possible to open the wrapper easily in order to remove the brush.

The device according to the invention comprises a film-feed assembly, which can optionally be excluded, suitable to provide one or more strips of film transverse to the direction of feed of the brushes which have already been inserted into the wrapper to be completed, that is, axially to the brush and hence to the wrapper itself.

The device also comprises a welding assembly comprising welding means suitable to weld the open end of the wrapper to be completed, with or without supplementary film.

In one version of the invention, the brushes advance in correspondence with the device according to the invention by means of a brush-feed assembly equipped with positioning and clamping means, each of which supports a single brush in a cantilevered position on the side of the handle.

The brushes are arranged orthogonal to the direction of translation of the feed assembly, with the bunch of bristles facing the welding assembly and the end portion of the wrapper to be completed is positioned between these elements.

In the preferential version of the invention, the welding is the ultra-sound type.

According to a variant, the welding is achieved thermally.

The device according to the invention also comprises cutting means suitable to cut the part of the supplementary film not welded to the end portion of the wrapper and protruding outside the latter.

In a variant, the device according to the invention co-operates downstream with an assembly suitable to turn the protruding flap onto the wrapper and an optional assembly suitable to attach the flap to the wrapper in such a manner that it can be removed, for example with a label.

### BRIEF DESCRIPTION OF THE DRAWINGS

These and other characteristics of the invention will become clear from the following description of a preferred form of embodiment given as a non-restrictive example with the aid of the attached drawings wherein:
- Fig. 1: is a schematic view from above of a machine on which the device according to the invention is assembled;
- Fig. 2: is a side view of Fig. 1;
- Figs. 3a-3b: show, respectively with a side view and a front view, the device according to the invention in a first working position;
- Figs. 4a-4b: show the device shown in Figs. 3a-3b in a second working position;
- Fig. 5: shows a first form of a wrapper for brushes to be completed with the device according to the invention;
- Figs. 6 and 7: show other forms of a wrapper for brushes to be completed with the device according to the invention;
- Figs. 8-11: show four different forms of wrappers for brushes obtained with the device according to the invention;
- Fig. 12: is a side view of the wrapper shown in Fig. 7 during the completion step with the device according to the invention;
- Fig. 13: is a side view of the wrapper shown in Fig. 6 during the completion step with the device according to the invention;
- Fig. 14: shows a detail of the finishing station co-operating with the completion device according to the invention.

### DETAILED DESCRIPTION OF PREFERRED EMBODIMENT

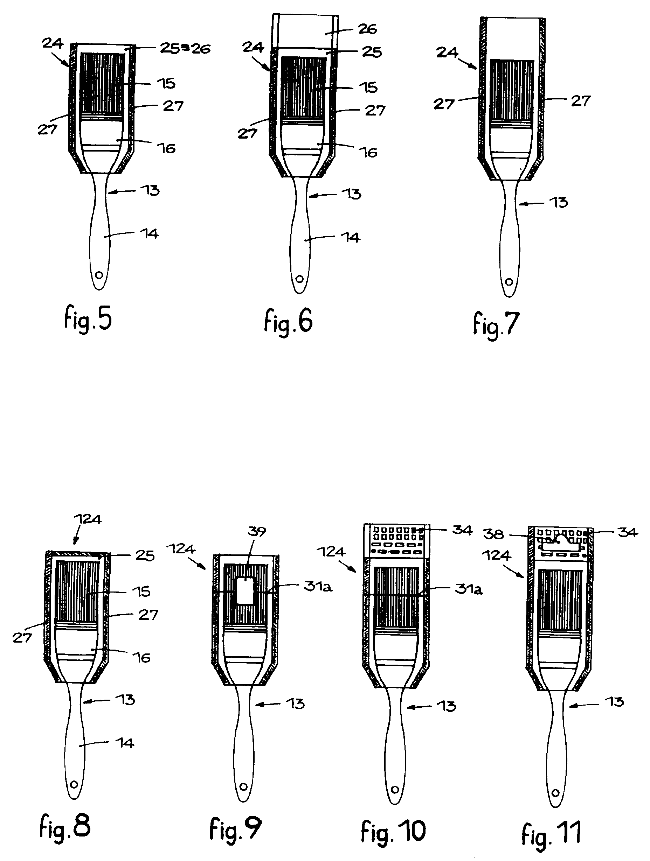

With reference to the attached drawings, a completion device 10 according to the invention is provided downstream of a packaging station 11 of an automatic packaging machine 12 for brushes 13 defined by a handle 14 (Fig. 5), a bunch of bristles 15 and a containing ferrule 16.

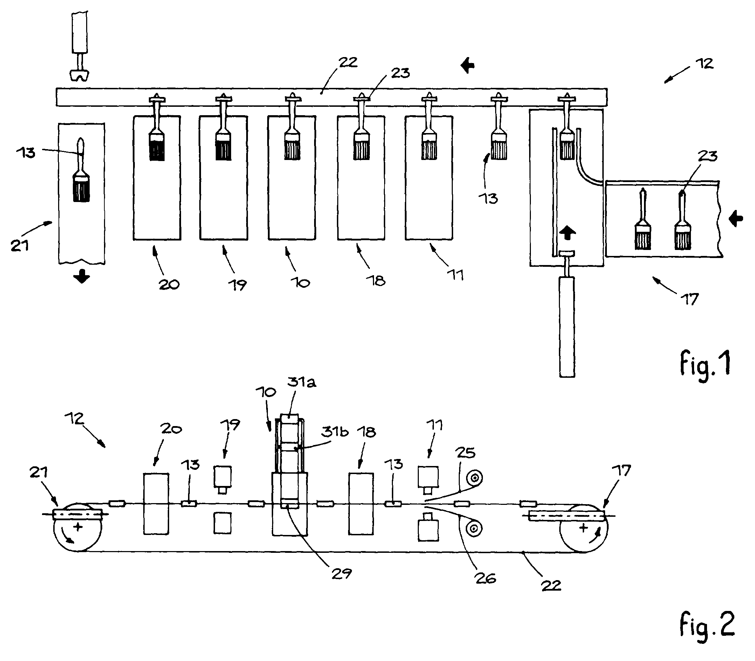

The packaging machine 12 comprises not only the packaging station 11, but also other stations 17-21 (Figs. 1 and 2).

To be more exact, upstream of the device 10, there is a feed station 17 and a control station 18, while downstream of the device 10 there is a punching station 19, a finishing station 20 and a discharge station 21.

The brushes 13 are taken individually and in sequence from one station to the other by means of a step-by-step brush-feed assembly 22 of a conventional type, comprising flexible drawing means closed in a ring, such as a belt, a chain or similar.

On the brush-feed assembly 22 there is a plurality of positioning and clamping elements 23, separated from each other by the length of one step, or a multiple of a step, of the brush-feed assembly 22.

Each positioning and clamping element 23 is suitable to co-operate temporarily with the handle 14 of the brush 13 to clamp it during its movement from the feed station 17 to the discharge station 21.

The feed station 17 is suitable to deliver a single brush 13 at a time to the positioning and clamping elements 23.

The packaging station 11 is suitable to supply at outlet brushes 13 individually equipped with a wrapper 24 made from two superimposed films, upper 25 and lower 26, made of plastic material such as PVC, polyethylene, copolymers of ethylene, or otherwise.

The films 25 and 26 are heat-welded together, in the packaging station 11, along heat-welding lines 27 suitable to achieve a tubular wrapper 24 closed on three sides and open at the front.

The wrapper 24 shown in Fig. 5 is made with films 25 and 26 of equal length and slightly protruding from the bristles 15; the wrapper shown in Fig. 6 has strips 25 and 26 of a different length, wherein the strip 26 defines a single section protruding with respect to the bristles 15, whereas the wrapper shown in Fig. 7 has strips 25 and 26 of equal length defining a double section protruding from the bristles 15.

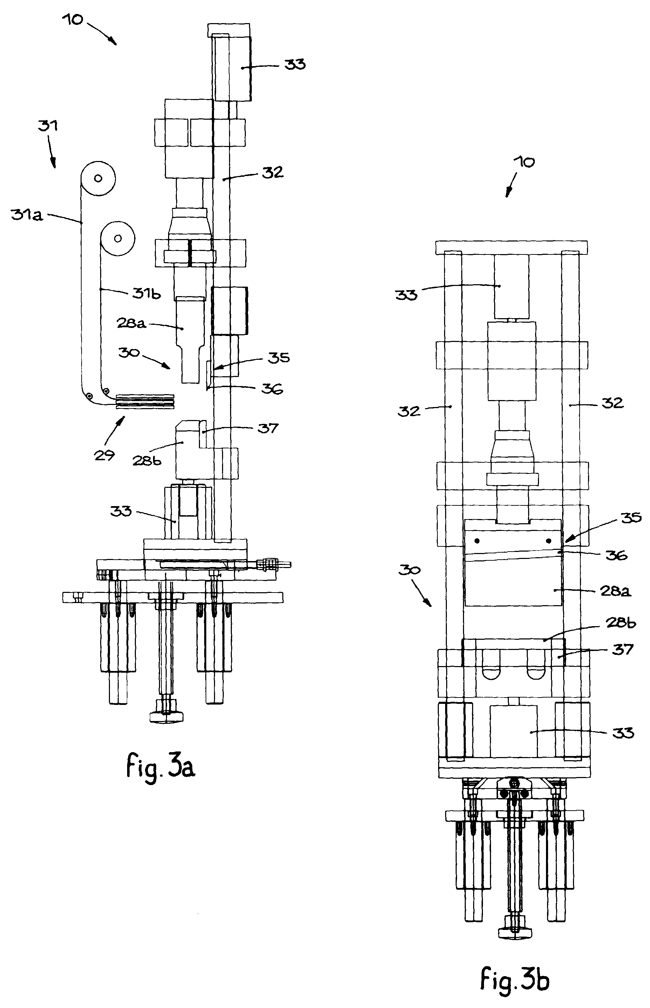

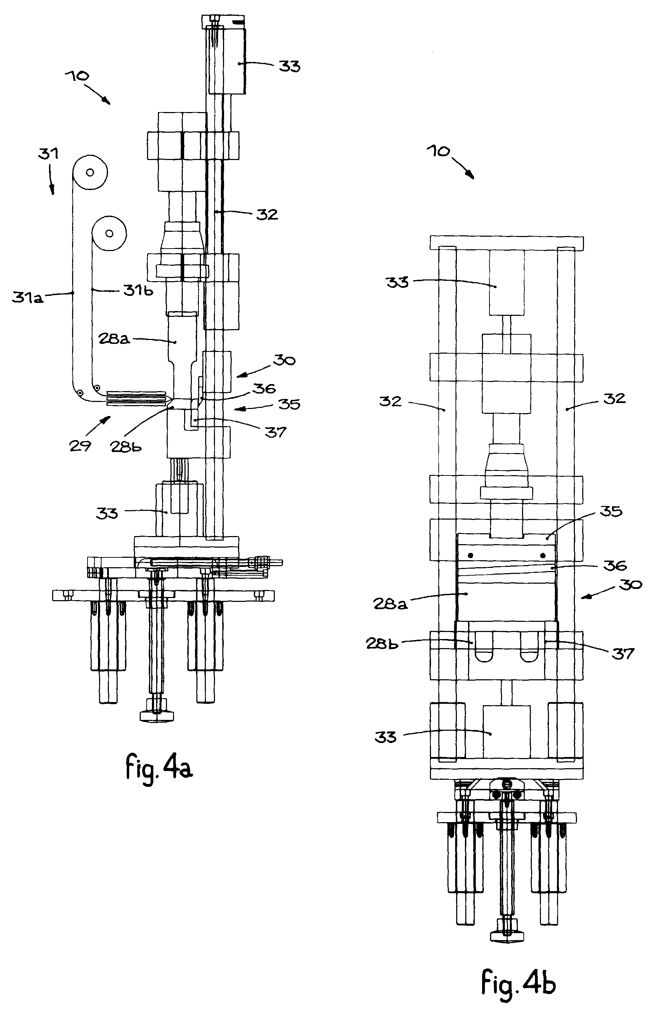

The device 10 according to the invention comprises a welding assembly 30 (Figs. 3a, 3b, 4a and 4b) suitable to weld the portion of every wrapper 24 which is open at the front in order to close it definitively, achieving the configuration shown in Fig. 8.

The device 10 is also suitable to weld to the open front portion one or more supplementary films 31 in order to close and at the same time reinforce the end portion, achieving, starting from the configurations shown in Figs. 6 or 7, the configurations shown in Figs. 10 and 11.

The supplementary films 31 are substantially the same width as the wrapper 24 and the thickness can be the same as or different from the thickness of the individual films 25 and 26.

The supplementary films 31, in this case upper 31a and lower 31b, are supplied to the welding assembly 30 by a film-feed assembly 29.

The film-feed assembly 29 comprises, for each supplementary film 31, drawing means, for example of the gripper type, with counter-opposed rollers, conveyor belt or otherwise, which are not shown in any detail here.

The drawing means are driven individually to make the relative supplementary film 31 advance by a certain section in a transverse direction to the direction of feed of the brushes 13, that is, axially with respect to the wrapper 24 to be completed.

The film-feed assembly 29 can make all the supplementary films 31 provided advance at the same time, or one at a time, as will be explained in more detail hereafter, so as to allow different types of finished wrappers 124 to be achieved.

The welding assembly 30 (Figs. 3a, 3b, 4a and 4b) comprises two welding elements, upper 28a and lower 28b, movable from a stand-by position, in which they are distanced from the welding zone, to a working position in which they close and are taken into contact with the supplementary films 31 and the end portion of the wrapper 24.

In this case, the welding elements 28a and 28b are associated in a sliding manner with vertical uprights 32 and are driven by respective actuators 33, for example of the pneumatic type.

The welding elements 28a and 28b are suitable to carry out ultra-sound welding or, according to a variant, heat welding.

In this case, each welding element 28a and 28b has a working surface defined by a plurality of ridges, which allows to weld the supplementary films 31 to the wrapper 24 with a plurality of welding points 34 which are close together and reproduce a defined geometric pattern (Figs. 10 and 11).

The device 10, when the supplementary films 31a and 31b are inserted, functions as follows:

The brush-feed assembly 22 feeds the brushes 13 forwards, with the wrapper 24 still to be completed, from the packaging station 11 to the device 10, in such a way that the open end portion of the wrapper 24 is arranged between the welding elements 28a and 28b.

At this point the film-feed assembly 29 makes the two supplementary films 31a and 31b advance by defined sections.

It is obvious that there may be more than two supplementary films 31 not only one.

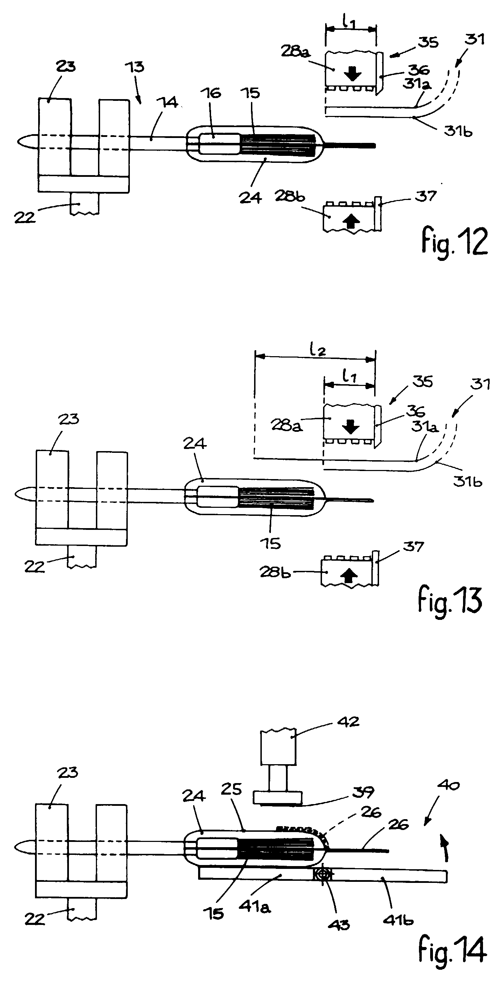

As shown in Fig. 12, the supplementary films 31a and 31b may be made to advance by the same and defined length l₁, or, as shown in Fig. 11, one of the two films, for example the upper film 31a, may be made to advance by a length l₂, greater than l₁, so as to define an additional lip, or flap, which is positioned above the wrapper 24 in the zone of the bristles 15.

Subsequently, the welding elements 28a and 28b are taken one against the other, so that the two films 31a and 31b are welded to the end portion of the wrapper 24.

According to the invention, at the side of the welding elements 28a and 28b, on the side opposite the positioning and clamping element 23, there are cutting elements 35 suitable to cut the lips of the films 31a and 31b protruding beyond the end portion of the wrapper 24.

In this case, the cutting elements 35 are stationary and comprise a blade 36 associated with the upper welding element 28a and a counter-blade 37 associated with the lower welding element 28b.

According to a variant, which is not shown in the drawings, the cutting elements are movable and comprise at least a blade which can slide transversely with respect to the supplementary films 31.

The finished wrapper 124 which is obtained when welding and cutting are completed may be of the type shown in Figs. 9, 10 and 11.

In Fig. 9, a wrapper 24 is obtained which is closed but not definitively, starting from the configuration shown in Fig. 6; this operation is made by a finishing station 20 located downstream of the device 10.

In the case of Fig. 14, the finishing station 20 comprises a folding assembly 40 including a stationary supporting plate 41a and a movable plate 41b, associated with a rotary actuator 43.

The movable plate 41b is suitable to rotate to fold the lower portion of film 26, which protrudes beyond the bunch of bristles 15, onto the upper film 25.

At the same time, a piston device 42 is suitable to apply an adhesive label 39 to maintain the folded part of the lower film 26 in the closed position.

According to a variant, the brush 13 emerging from the device 10 is translated, by means of the brush-feed assembly 22, towards the punching station 19 which provides to make an eyelet 38 (Fig. 11) in correspondence with the reinforced end portion of the wrapper 124.

The control station 18, provided upstream of the device 10, controls the correct positioning of every wrapper 24 to be completed on the respective brush 13, thus ensuring that the welding elements 28a and 28b correctly weld the supplementary films 31 to the end portion of the wrapper 24.

The control station 18 may comprise, for example, gripper means, which are not shown in the drawings, which can grip the end portion of the wrapper 24 and pull it in the opposite direction to the handle 14 so that the wrapper 24 is perfectly adapted to the conformation of the brush 13.

The finishing station 20 is suitable to close the possible lip defined by the non-welded portion of supplementary film 31a and to constrain it to the body of the finished wrapper 124 by means of an adhesive label 39.

When the last station 20 of the machine 12 has been passed, the brush 13 continues to advance in step until it reaches the discharge station 21 co-operating with collection means which are not shown here.

It is obvious that modifications and additions may be made to the invention, but these shall remain within the field and scope thereof.

For example, a single one of the two welding elements 28a or 28b may be movable, while the other welding element 28b or 28a, may be kept stationary.

## Claims

1. Device to complete the packaging of wrappers (24) for brushes (13) each one having a handle (14) and a bunch of bristles (15), the wrappers to be completed (24) having a substantially tubular shape, defined by two strips of film (25, 26) which are super-imposed and welded together along the edges, and have an open outer end portion which extends beyond the bunch of bristles (15), the device being characterised in that it comprises two welding elements (28a, 28b) arranged on opposite sides with respect to the wrapper to be completed (24) and movable one against the other between a first inactive position, not interfering with the outer end portion of the wrapper (24), and a second working position in contact with the outer end portion, the welding elements (28a, 28b) being suitable to weld the two super-imposed strips of film (25, 26) in correspondence with the outer end portion.

2. Device as in Claim 1, characterised in that the welding elements (28a, 28b) are suitable to carry out ultra-sound welding.

3. Device as in Claim 1, characterised in that the welding elements (28a, 28b) are suitable to carry out heat welding.

4. Device as in any claim hereinbefore, characterised in that film-feed means (29) are suitable to feed a third strip of film (31) in a direction substantially axial with respect to the wrapper to be completed (24), the welding elements (28a, 28b) being suitable to weld a pre-defined section of the third strip of film (31) to the outer end portion of the wrapper (24).

5. Device as in Claim 4, characterised in that the welding elements (28a, 28b) co-operate with cutting means (35), suitable to intervene when the welding elements (28a, 28b) are in the second working position, to cut the third strip of film (31).

6. Device as in Claim 5, characterised in that the cutting means (35) comprise a blade (36) laterally associated with a first of the welding elements (28a) and a counter-blade (37) laterally associated with a second of the welding elements (28b).

7. Device as in Claim 5, characterised in that said cutting means (35) comprise at least a blade transversely movable with respect to said third strip of film (31).

8. Device as in Claim 4, characterised in that the film-feed means (29) are also suitable to feed at least a further strip of film (31a, 31b).

9. Device as in Claim 8, characterised in that the film-feed means (29) are suitable to feed the third and the further strips of film (31a, 31b) independently of each other.

10. Device as in Claim 9, characterised in that one of the third and further strips of film (31a) advances by a greater section than the other (31b), so as to define a lip of strip which is not welded to the wrapper (24).

11. Device as in Claim 4, characterised in that on the pre-defined section of the third strip of film (31), welded to the outer end portion of the wrapper (24), an eyelet (38) or a through hole is suitable to be made.

12. Device as in any claim hereinbefore, characterised in that downstream of the welding elements (28a, 28b) there is a finishing station (20) comprising a device (42) suitable to apply an adhesive label (39) to completely close the wrapper (24).

13. Device as in Claim 12, characterised in that the finishing station (20) comprises an assembly (40) suitable to fold the parts of strip of film (26, 31) protruding beyond the bunch of bristles (15) to apply the adhesive label (39).
